# EUROPEAN PATENT APPLICATION

(11) **EP 4 826 648 A1**
(43) Date of publication of application: **21.10.2026**
(21) Application number: 25171430.9
(22) Date of filing: 17.04.2025
(51) Int. Cl.: G06T 7/00, G06T 7/11

(54) **METHOD FOR HISTOLOGY IMAGE TRANSFORMATION**

(71) Applicant: Technische Universität Darmstadt Körperschaft Des Öffentlichen Rechts, 64289 Darmstadt (DE)
(72) Inventor: Oezdemir, Cetin, 64287 Darmstadt (DE)
(74) Representative: WSL Patentanwälte Partnerschaft mbB

(57) **Abstract**

The invention relates to a computer-implemented method for transforming a digital histology image using a machine learning model. The method leverages advanced architectures, such as Graph Neural Networks (GNNs), Vision Transformers (ViTs), and Generative Adversarial Networks (GANs), to transform input histology images into virtual stain images, segmentation representations, or both. The invention is particularly suited for applications in computational pathology, offering a cost-effective, time-saving, and flexible solution by eliminating the need for physical staining, reducing reliance on pixel-level annotations, and enabling adaptive integration into diagnostic workflows.

## Description

### FIELD OF THE INVENTION

The invention relates to a method for transforming a digital histology image using a machine learning model.

### BACKGROUND OF THE INVENTION

Histology, as a central discipline in pathology, plays a crucial role in diagnosing and understanding diseases. Traditionally, histological imaging relies on physical tissue sections that are visualized through labor-intensive staining techniques, such as Hematoxylin and Eosin (H&E) and/or specific immunostainings. Based on the staining pattern generated by these techniques diseases such as cancer can be diagnosed for example by evaluating certain biomarker densities and/or their localizations. These processes are time-consuming, resource-intensive, and subject to variability depending on the sample and staining conditions. In particular tissue sections from patients are limited as they frequently derive from resected tissue such as tumorous tissue which often give insufficient material for multiple tests.

Although multiple (re)staining of tissue sections allows for sequential visualization of more than one biomarker or staining pattern in a single tissue section, antigen loss or tissue degradation is a significant concern, as repeated exposure to harsh stripping and/or washing reagents and multiple staining cycles can damage tissue integrity and reduce antigenicity. This method is also time-intensive and prone to variability, as differences in stripping efficiency or staining intensity between cycles can make quantitative or comparative analysis challenging. Proper controls, validated protocols, and careful interpretation are essential to mitigate these issues and achieve reliable results.

In addition, multiplexing immunostainings is limited by the number of fluorophores and/or enzymes for chromogenic-labelling which can be combined with each other and analyzed in a reliable way without signals spilling into non-specific channels.

Recent advancements in artificial intelligence (AI) and medical imaging have paved the way for innovative approaches in histology. One such advancement is virtual staining, which leverages Al-based methods to generate histological images without the need for physical staining. This technique utilizes modern deep-learning technologies to transform raw imaging data into histologically interpretable representations. The potential applications of virtual staining are vast. In diagnostics, it can enable faster and more accurate disease identification, particularly in oncology and neuropathology. In research, it facilitates the study of tissue samples without destructive staining techniques.

WO2019154987A1 describes a method to identify biomarkers in tissue samples without the need for extensive staining, reducing time, cost, and tissue resource constraints by using a machine learning logic (MLL).

However, known virtual staining methods require precise pixel-level ground truth which have a high computational demand especially when working with images with considerable sizes such as whole slide images (WSI) and thereby making pixel-level annotation cumbersome and costly. Novel approaches are therefore necessary to facilitate the workflow and reduce costs.

### AIM

Against this background, the task of the invention is to provide a method for histology image transformation that reduces dependency on pixel-level ground truth and/or annotations by leveraging self-supervised learning and spatial alignment techniques, which results in improved efficiency, reduced time and computational power required, reduced cost, and enhanced flexibility with respect to the input data used.

### DESCRIPTION OF THE INVENTION

According to the invention, this task is solved by a computer-implemented method for transforming a first digital histology image, wherein the method comprises the following steps:
(A) providing as input information a first digital histology image originating from a tissue sample,
(B) transforming the input information provided in (A) into an output information different from the input information, wherein the output information is visualizable as a second digital histology image of the tissue sample or wherein the output information is visualizable as a segmentation representation of the tissue sample,
wherein a Graph Neural Network (GNN) is used in step (B) for transforming the input information into the output information.

In step A, the first digital histology image may be unstained, partially stained or previously transformed by an AI model. Further, the segmentation representation may be binary, multi-class or probabilistic.

The GNN may be used in step B for spatial feature extraction, wherein a Vision Transformer (ViT) is used for contextual analysis, and a Generative Model (GAN or Diffusion Model) is used for image-to-image translation.

Step (B) may be performed in a single stage or as a multi-step transformation pipeline (e.g., virtual staining followed by segmentation).

The inventive computer-implemented method comprises a step of providing as input information a first digital histology image. With "histology image" is meant a representation of a tissue sample that has been prepared in a distinct manner which is typically acquired through a microscope and which is used to study the microanatomy of tissues. "Digital histology image" refers to the electronic representation of tissue samples as pixel-based images preferably captured using whole slide imaging (WSI) scanners or digital microscopes which is typically depictable in a binary format. Each pixel corresponds to a specific area of the tissue, storing color and intensity information that reflects morphology and/or staining.

Whole slide imaging (WSI) refers to the technique of scanning entire tissue sections preferably mounted on glass slides to create high-resolution digital images. These images, often referred to as "whole slide images", are used in digital pathology for the examination, analysis, and diagnosis of biological tissues.

A first digital histology image originating from a tissue sample is used as input information in the inventive computer-implemented method. A "tissue sample" is a biological specimen extracted from an organism in the form of a biopsy, typically prepared as a thin slice mounted on a glass slide for microscopic examination. These samples are often stained with dyes or antibodies, which is referred to as "physical stain" to highlight cellular structures and captured as digital histology images. "Originating from" in the sense of the invention can mean that the first digital histology image directly originates from a tissue sample for example by directly generating a digital image of a tissue section through microscopic imaging or the first digital histology image can originate indirectly from a tissue sample in that a digital image which was generated through microscopic imaging was transformed into a further digital histology image, which is then used as input information in step (A).

This input information is transformed into an output information in step (B), whereby the output information differs from the input information. The output information is either visualizable as a second digital histology image or as a segmentation representation.

A "segmentation representation" is a visualization technique used in semantic segmentation which comprises segmentation overlays and segmentation maps. Segmentation overlays combine an original image with a color-coded segmentation mask, showing segmented regions. It highlights specific classes (e.g., antigen/biomarker-positive regions, tumorous regions, normal tissue, or background) on the original image helping to identify patterns, abnormalities, or regions of interest and thus enhancing diagnostic accuracy, enabling quantitative insights and increases standardization across different pathology and/or research departments. Segmentation maps are based on category labels of each pixel and can be visualized for example as color-coded matrices or images.

For transforming the input information into the output information in step (B) a Graph Neural Network (GNN) is used. A "Graph Neural Network (GNN)" is a type of neural network designed to process and analyze data represented as graphs, where entities are nodes and their relationships are edges. GNNs use a message-passing mechanism to aggregate information from a node's neighbors iteratively, enabling the network to learn both local and global graph structures.

A Generative Adversarial Network (GAN) is a type of machine learning model consisting of two neural networks, referred to as the 'generator' and the 'discriminator,' which are trained simultaneously through adversarial processes. The generator network generates synthetic data samples, such as images, that mimic a given data distribution. The discriminator network evaluates these samples to determine whether they are real (from the actual data set) or fake (generated by the generator). The generator's objective is to produce data that is indistinguishable from real data, while the discriminator's goal is to accurately distinguish between real and generated data. The training process continues iteratively, with the generator improving its ability to create realistic data and the discriminator enhancing its detection capabilities, ultimately leading to a generator that can produce highly realistic data samples.

A virtual stain histology image refers to a histology image exhibiting a staining which has been created at least partially within a computer-generated environment. Typically, a virtual stain histology image is itself a digital histology image, which is typically, but not necessarily tied to another digital histology image which originated from a physical tissue sample. Virtual stain histology images comprise virtual immunohistochemistry images, virtual immunofluorescence images, virtual classical stain histology images.

A Vision Transformer (ViT) is a deep learning architecture designed for image analysis that applies transformer-based Multi-head self-attention mechanisms. Unlike convolutional networks, ViTs divide images into smaller patches and model long-range dependencies, improving feature extraction in complex histology images.

Deep Spectral Methods (DSM) combine deep learning-based feature extraction with graph spectral techniques for histology image segmentation. First, a deep neural network extracts dense image features. These are used to construct a semantic affinity matrix, which quantifies relationships between regions based on color and structural similarity. By integrating primary color affinity information, DSM decomposes images into soft segments, facilitating downstream applications such as target localization and unsupervised segmentation.

The disclosed invention leverages a combination of Graph Neural Networks (GNNs), Vision Transformers (ViTs), and Generative Models to achieve significant advancements in histology image transformation. Unlike conventional methods, GNNs utilize a graph-based representation, where image elements are modeled as nodes, and their relationships are encoded as edges. This enables a flexible and efficient approach to extracting spatial and contextual information from histology images.

One key advantage of GNNs is their ability to represent non-Euclidean data structures. By transforming image regions into graph representations, GNNs can model complex relationships, such as spatial connectivity and local tissue structures, without relying on pixel-level ground truth. This enhances contextual feature extraction while reducing the dependency on manual annotations. Additionally, GNNs aggregate information from neighboring nodes, improving the robustness of local and global feature modeling.

However, GNNs alone are not sufficient for complete image-to-image transformation. According to an embodiment of the present invention, ViTs are employed to capture long-range dependencies and contextual relationships across histology images, while Generative Models (GANs or Diffusion Models) handle stain-to-stain translation and high-resolution image synthesis. This integration of architectures allows for efficient feature representation, computational efficiency, and high-fidelity virtual staining or segmentation results.

Unlike conventional grid-based processing, which struggles with irregular tissue structures and sparse regions, the graph-based representation used in this method ensures efficient handling of complex histological features. This reduces computational overhead while maintaining high precision, making the invention particularly advantageous for high-resolution whole slide image transformations.

In a preferred embodiment the first digital histology image is selected from the group consisting of digital stain-free histology images, digital physical stain histology images and digital virtual stain histology images. This includes images obtained from unstained tissue, conventionally stained tissue, and Al-generated virtual stains, ensuring broad compatibility with different histological imaging modalities.

"Digital stain-free histology images" refer to images obtained from a tissue slice that was not stained before image acquisition. These images are also referred to as label-free histology images and are preferably acquired by phase contrast, brightfield, light-sheet, multiphoton and/or fluorescence microscopy, the latter detecting autofluorescence in at least one fluorescence channel. Using digital stain-free histology images as first digital histology image as input information is a cost-efficient and time saving way to perform the inventive method as no physical staining is required, saving money by omitting reagents and preventing the technician and/or medical staff from exposure to hazardous substances, thus reducing the health risk of people involved in performing histological diagnosis.

"Digital physical stain histology images" are images obtained from tissue sections stained with physical dyes, antibodies or any other suitable reagent. Preferably these images are obtained from tissue sections stained with classical histological staining methods and/or immunostaining methods.

Preferably the immunostainings either use immunohistochemical (IHC) staining methods, more preferably IHC staining methods using chromogenic labelling such as staining through conversion of chromogenic substrates like Diaminobenzidine (DAB) catalyzed by horseradish peroxidase (HRP)-coupled antibodies, or immunofluorescence staining methods, more preferably immunofluorescence staining methods using antibodies coupled to fluorescent dyes.

Classical histological staining methods refer to techniques using application of dyes that bind selectively to specific structures based on the chemical properties of the dyes and the structures. Classical histological staining methods are particularly preferred as they are comparably cheap, reliable, well-established and give a detailed view on tissue morphology.

In a preferred embodiment the first digital histology image is a digital physical stain histology in which the tissue section is stained with a method selected from the group consisting of Hematoxylin and Eosin (H&E), Toluidine Blue, Masson's Trichrome, Van Gieson Stain, Periodic Acid-Schiff (PAS), Oil Red O and Luxol Fast Blue, more preferably H&E or Masson's Trichrome and most preferably H&E. H&E is the most commonly used staining method in pathology as it effectively delineates overall tissue architecture and cellular details and thus provides detail-rich information which serves as suitable starting point for downstream image transformation.

In another preferred embodiment the first digital histology image is an image of an immunostained tissue section. Particularly preferred the immunostaining method is an IHC staining method using HRP-coupled antibodies. IHC is a widely used and well-established method to visualize specific antigens, i.e. biomarkers allowing for precise targeting of the antigen of interest within the tissue which can easily be combined with classical histological staining methods such as counterstaining with Hematoxylin to visualize the cell nuclei and which is compatible with brightfield microscopy, thus not requiring fluorescent laser settings.

In another preferred embodiment the first digital histology image is a virtual stain histology image. Preferably the virtual stain histology image as first digital histology image was generated using the inventive method.

In one preferred embodiment the steps of the inventive computer-implemented method can be performed multiple times within a single process. Preferably, the steps are performed twice in succession. In the first cycle, a digital histology image directly originating from a tissue sample preferably through microscopy is provided in step (A) as first digital histology image input information. In step (B) this image is then transformed into an output information which is visualized as a second digital histology image, preferably a digital virtual stain histology image and more preferably a digital virtual IHC histology image. In the second cycle, the second digital histology image generated in the first cycle serves as the first digital histology image in step (A). This first digital histology image is then indirectly originating from a tissue sample and will be transformed into an output information in step (B). Preferably this output information is visualized as a segmentation representation. Alternatively, the output information is visualized as a further virtual stain histology image, more preferably a further digital virtual IHC histology image. Using the inventive computer-implemented method in consecutive cycles has the advantage that a continuative process can be generated which allows for an efficient, consistent and cost-saving workflow and/or which allows for the generation of a multitude of histology images in no time.

In a preferred embodiment, the transformation process may be performed iteratively within a single workflow. In the first cycle, a digital histology image originating directly from a tissue sample is provided in step (A). Step (B) then transforms it into a second digital histology image, preferably a digital virtual stain histology image or a virtual immunohistochemistry (IHC) image. In the second iteration, the output of step (B) from the first cycle serves as the new first digital histology image in step (A), allowing for further transformation into additional virtual stains or segmentation representations.

In a preferred embodiment the image transformation in step (B) is an image-to-image transformation meaning that the input information from a first digital histology image is transformed into a second digital histology image. Using a GNN for such image-to-image transformation by effectively capturing complex relationships and hierarchical feature interactions through graph-based representations is superior over traditionally used neural networks for image-to-image transformation.

In another preferred embodiment the image transformation in step (B) is a segmentation representation, preferably generating a segmentation overlay as output information. In particular, it allows for omitting pixel-level annotations and by leveraging graph-based input data it enables flexible feature extraction.

The transformation process in step (B) may be performed as an image-to-image transformation or as a segmentation representation. In a preferred embodiment, when segmentation representation is applied, a vision transformer-based graph neural network (ViGNN) is used to model spatial and contextual relationships. The ViGNN architecture may comprise:
- Graph convolution layers for feature aggregation and/or
- a Max-Relative Graph Convolutional Network (MRGCN) for improving relative relationship encoding, and/or
- at least two Vision GNN (ViG) blocks for enhanced edge precision and region classification and/or
- the combination of ViGNN with hierarchical feature extraction ensures high accuracy in segmenting histological structures while reducing dependency on pixel-level annotations.

In a preferred embodiment the ViGNN architecture comprises two Vision GNN (ViG) blocks. Such a dual-block setup improves edge precision and overall region classification. Preferably each ViG block comprises a graph convolution layer and at least one FFN module.

In a preferred embodiment, the method generates a segmentation representation in step (B), wherein the segmentation representation is of a biomarker. Preferably, the biomarker is a cancer biomarker or an immune-related biomarker, enabling precise identification of key diagnostic markers within histological images. The term 'biomarker' as used herein refers to a molecule that can be detected in a biological sample as an indicator of tissue type, pathological processes, disease states, or therapeutic responses. Biomarkers include proteins, peptides, nucleic acids, lipids, carbohydrates, and molecular complexes thereof. In a preferred embodiment, the biomarker is a protein, which may serve as a diagnostic, prognostic, or predictive marker in histopathology applications. In a particular embodiment, the biomarker is selected from the group consisting of: a protein, a peptide, a nucleic acid, a lipid and a carbohydrate. More particularly, the biomarker may be a protein. Certain markers are characteristic of particular cells, while other markers have been identified as being associated with a particular disease or *condition.* More particularly, the biomarker is preferably a protein that can be visualized via histological or immunohistochemical staining techniques. Nucleic acids, lipids, or carbohydrates are not included unless rendered image-visible by specialized staining protocols or surrogate molecular detection systems.

Examples of known prognostic markers that can be used as biomarkers according to embodiments of the invention include proteins that are routinely visualized via immunohistochemistry (IHC) or immunofluorescence and are associated with cancer biology or immune responses. Biomarkers not visually distinguishable through standard histological techniques are excluded from the scope of segmentation or virtual staining.

Hormone or hormone receptor markers include human chorionic gonadotropin (HCG), adrenocorticotropic hormone, carcinoembryonic antigen (CEA), prostate-specific antigen (PSA), estrogen receptor (ER), progesterone receptor (PR), androgen receptor, gC1 q-R/p33 complement receptor, IL-2 receptor, p75 neurotrophin receptor, PTH receptor, thyroid hormone receptor, and insulin receptor. Other biomarkers may include the FAP protein or a cluster of differentiation (CD) marker, e.g. CD1a, CD1b, CD1c, CD1d, CD1e, CD2, CD3delta, CD3epsilon, CD3gamma, CD4, CD5, CD6, CD7, CD8alpha, CD8beta, CD9, CD10, CD11 a, CD11 b, CD11 c, CDw12, CD13, CD14, CD15, CD15s, CD16a, CD16b, CD20, CD68 and others. Other biomarkers may include lymphoid markers, e.g. alpha-1 - antichymotrypsin, alpha-1 -antitrypsin, B cell marker, bcl-2, bcl-6, B lymphocyte antigen 36 kD, BM-1 (myeloid marker), BM-2 (myeloid marker), galectin-3, granzyme B, HLA class I Antigen, HLA class II (DP) antigen, HLA class II (DQ) antigen, HLA class II (DR) antigen, human neutrophil defensins, immunoglobulin A, immunoglobulin D, immunoglobulin G, immunoglobulin M, kappa light chain, and others. Other biomarkers may include tumor markers, e.g. alpha fetoprotein, apolipoprotein D, BAG-1 (RAP46 protein), carbohydrate antigen CA19-9 (sialyl-Lewis^{A}), CA50, CA125, CA242, chromogranin A, clusterin (apolipoprotein J), epithelial membrane antigen, epithelial-related antigen, epithelial specific antigen, epidermal growth factor receptor (EGFR), estrogen receptor (ER), gross cystic disease fluid protein-15, hepatocyte specific antigen, HER2, heregulin, human gastric mucin, human milk fat globule, MAGE-1, matrix metalloproteinases, tyrosinase, tyrosinase-related protein-1, villin, von Willebrand factor, CD34, CD51 Ab-1 , CD63, CD69, Chk1 , Chk2, claspin C-met, COX6C, CREB, cyclin D1, cytokeratin, cytokeratin 8, DAPI, Desmin, DHP (1 -6 Diphenyl-1 ,3, 5-Hexatriene), and others. Other biomarkers may include cell cycle associated markers, e.g. apoptosis protease activating factor-1, bcl-w, bcl-x, bromodeoxyuridine, CAK (cdk-activating kinase), cellular apoptosis susceptibility protein (CAS), caspase 2, and others. Other biomarkers may include neural tissue and tumor markers, e.g. alpha B crystallin, alpha-internexin, alpha synuclein, amyloid precursor protein, beta amyloid, calbindin, choline acetyltransferase, excitatory amino acid transporter 1, GAP43, glial fibrillary acidic protein (GFAP), glutamate receptor 2, myelin basic protein, nerve growth factor receptor (gp75), neuroblastoma marker, and others. Other cellular markers include centromere protein-F (CENP-F), giantin, involucrin, lamin A/C, LAP-70, mucin, nuclear pore complex proteins, p180 lamellar body protein, cathepsin D, Ps2 protein, Her2-neu, P53, S100, epithelial marker antigen (EMA), TdT, MB2, MB3, PCNA, and Ki67.

More preferably the segmentation representation is of a biomarker selected from the group consisting of Ki-67, CD8, CD4, KRAS, epidermal growth factor receptor (EGFR), BRCA1, BRCA2, PD-L1, PD-1, alkaline phosphatase (ALP), HER2, HER1, prostate-specific antigen (PSA), CA125, estrogen receptor (ER), progesterone receptor (PR), carcinoembryonic antigen (CEA), p53, E-cadherin, CTLA-4, platelet-derived growth factor receptor (PDGFR), PTEN, FOXP3, CD20, CD68, neurotrophic receptor tyrosine kinase (NTRK), TTF-1 (thyroid transcription factor-1)), GATA3, vascular endothelial growth factor (VEGF) and GLUT-1 or combinations of the foregoing.

The segmentation may be performed for a single biomarker or a combination thereof, allowing multi-target virtual staining and quantitative tissue profiling.

Preferably the segmentation representation is of an immune cell marker, preferably of a T cell marker, and more preferably selected from the group consisting of CD8, CD4, PD-1, PD-L1 and CTLA-4 or combinations of the foregoing. Most preferably the segmentation representation is of CD8-positive T cells. CD8-positive T cells, also known as cytotoxic T cells, have the ability to initiate cell death in cancerous cells and hence their density as well as their location serve as important diagnostic and prognostic markers for tumorous tissue and plays a key role in the choice of treatment as it can predict the effectiveness of certain interventions such as immune checkpoint inhibitor therapies.

Some biomarkers, such as CD8, CD4, PD-1, and CTLA-4, may serve dual roles both as indicators of immune cell populations and as biomarkers relevant to cancer immunotherapy contexts. Their classification in the present disclosure reflects such dual applicability.

Preferably the segmentation representation is generated using unsupervised image *segmentation,* in particular using unsupervised image segmentation *based on* deep spectral methods and feature clustering; where specific biomarker labels (e.g., CD8) are desired, training is performed on reference data or virtual staining outputs. Unsupervised image segmentation eliminates the need for annotated datasets and can be adapted to new datasets without the need of retraining and/or it allows for unbiased discovery of patterns based solely on image features. Unsupervised segmentation leverages self-learning algorithms to discover tissue patterns, biomarker distributions, and cellular architecture based solely on image-derived features, making it robust to variations in staining and sample preparation.

In a preferred embodiment the method further comprises a step of image pre-processing. Image pre-processing prepares an image, i.e. improves the quality of input data, for further analysis, ensuring that subsequent processing is more effective and accurate. Preferably the image pre-processing step is performed between steps (A) and (B) of the inventive method and may include image partitioning, image thresholding, color space transformation, noise reduction, or background cleaning, either individually or in combination.

Preferably the pre-processing step comprises at least one of the method steps selected from the group consisting of image partitioning, image thresholding, color space transformation, noise reduction and background cleaning. Preferably at least two or three of these method steps are part of the pre-processing step.

Particularly preferably the method comprises an image partitioning step in which the first digital histology image is partitioned into two or more image patches. An image patch is a small, localized region of pixels extracted from a larger image. It is typically a rectangular or square area having two dimensions which are preferably equally sized.

Partitioning the first digital histology image into two or more patches has the advantage that the typically big input information can be split into small portions of input information. The more patches the image is partitioned into, the higher is the resolution of the output information. Yet, too many patches also increase the computational power and especially memory requirements to an extent that drives costs and process duration extensively. Thus, a number of 30.000 - 700.000 patches per first digital histology image is preferred, more preferred is a number of 100.000 - 600.000 and even more preferred a number of 200.000 - 500.000 or even 200.000 - 300.000, ensuring an optimal balance between resolution and computational efficiency.

Preferably one of the two dimensions of each of the two or more image patches has a size of 50 - 500 pixels, more preferably of 100 - 400, even more preferably of 120 - 350 and most preferably of 150 - 300. This size gives a good compromise between resolution and efficiency.

In a preferred embodiment both of the two dimensions of each of the two or more image patches have a size of 50 - 500 pixels, more preferably of 100 - 400, even more preferably of 120 - 350 and most preferably of 150 - 300. This size gives a good compromise between resolution and efficiency.

Preferably, this step of partitioning the first digital histology image into two or more image patches is part of a pre-processing process which is inserted between steps (A) and (B).

In another preferred embodiment the method further comprises a step of image thresholding. Preferably the step of image thresholding is part of a pre-processing process which is inserted between steps (A) and (B). Preferably image thresholding is performed on the first digital histology image which is used as input information in step (A).

Image thresholding is a technique in image processing used to convert a grayscale image into a binary image, which consists of two pixel intensity levels, typically black and white. It works by setting a threshold value and classifying each pixel in the image as either foreground or background based on its intensity. Preferably the image thresholding segments the first digital histology image into foreground comprising, preferably consisting of, stained tissue regions and background comprising, preferably consisting of, non-stained tissue regions.

Preferably the image thresholding method employs Otsu's method. Otsu's method automatically determines the optimal threshold value for separating an image into foreground and background regions. Using Otsu's method there is no need for manual input of threshold values and it is at the same time computationally efficient.

In another preferred embodiment the method further comprises a step of color space transformation. Preferably the step of color space transformation is part of a pre-processing process which is inserted between steps (A) and (B). Preferably image thresholding is performed on the first digital histology image which is used as input information in step (A).

Histology WSIs are typically stored in the RGB (red, green, blue) color space, as most digital scanners capture images using RGB-based sensors. However, RGB is not perceptually uniform and is suboptimal for image processing tasks such as stain normalization, color segmentation, and feature extraction. Alternative color spaces, such as HSV (hue, saturation, value) and CIELAB, provide improved perceptual consistency and better separation of luminance and chromatic information. In a preferred embodiment, the method applies a color space transformation, preferably to HSV or CIELAB, to enhance processing accuracy and facilitate robust tissue analysis.

Preferably, the second digital histology image generated in step (B) is a digital virtual stain histology image. Digital virtual stain histology images provide a rapid and cost-effective alternative to physical staining by computationally transforming histology images to mimic the staining patterns of traditional histochemical or immunohistochemical stains. By eliminating the need for reagents, virtual staining reduces processing time, minimizes tissue degradation, and lowers health risks associated with toxic dyes or chemical fixatives.

More preferably, the digital virtual stain histology image is a digital virtual immunohistochemistry (IHC) image or a digital virtual immunofluorescence (IF) image. These virtual staining techniques enable quantitative biomarker assessment without requiring physical staining procedures. By computationally mapping antigen expression, virtual IHC and IF images allow precise prognostic evaluation based on biomarker distribution, intensity, and spatial organization within tissue sections.

In a particular embodiment, the digital virtual immunohistochemistry image represents the prognostic expression of a biomarker selected from the group consisting of: a protein, a peptide, a nucleic acid, a lipid and a carbohydrate. More particularly, the biomarker may be a protein. Certain markers are characteristic of particular cells, while other markers have been identified as being associated with a particular disease or condition.

Examples of known prognostic markers that can be used as biomarkers according to embodiments of the invention include enzymatic markers such as, for example, galactosyl transferase II, neuron specific enolase, proton ATPase-2, and acid phosphatase. Hormone or hormone receptor markers include human chorionic gonadotropin (HCG), adrenocorticotropic hormone, carcinoembryonic antigen (CEA), prostate-specific antigen (PSA), estrogen receptor (ER), progesterone receptor (PR), androgen receptor, gC1 q-R/p33 complement receptor, IL-2 receptor, p75 neurotrophin receptor, PTH receptor, thyroid hormone receptor, and insulin receptor. Other biomarkers may include the FAP protein or a cluster of differentiation (CD) marker, e.g. CD1a, CD1b, CD1c, CD1d, CD1e, CD2, CD3delta, CD3epsilon, CD3gamma, CD4, CD5, CD6, CD7, CD8alpha, CD8beta, CD9, CD10, CD11 a, CD11 b, CD11 c, CDw12, CD13, CD14, CD15, CD15s, CD16a, CD16b, CD20, CD68 and others. Other biomarkers may include lymphoid markers, e.g. alpha-1 - antichymotrypsin, alpha-1 -antitrypsin, B cell marker, bcl-2, bcl-6, B lymphocyte antigen 36 kD, BM-1 (myeloid marker), BM-2 (myeloid marker), galectin-3, granzyme B, HLA class I Antigen, HLA class II (DP) antigen, HLA class II (DQ) antigen, HLA class II (DR) antigen, human neutrophil defensins, immunoglobulin A, immunoglobulin D, immunoglobulin G, immunoglobulin M, kappa light chain, and others. Other biomarkers may include tumor markers, e.g. alpha fetoprotein, apolipoprotein D, BAG-1 (RAP46 protein), carbohydrate antigen CA19-9 (sialyl-Lewis^{A}), CA50, CA125, CA242, chromogranin A, clusterin (apolipoprotein J), epithelial membrane antigen, epithelial-related antigen, epithelial specific antigen, epidermal growth factor receptor (EGFR), estrogen receptor (ER), gross cystic disease fluid protein-15, hepatocyte specific antigen, HER2, heregulin, human gastric mucin, human milk fat globule, MAGE-1, matrix metalloproteinases, tyrosinase, tyrosinase-related protein-1, villin, von Willebrand factor, CD34, CD51 Ab-1 , CD63, CD69, Chk1 , Chk2, claspin C-met, COX6C, CREB, cyclin D1, cytokeratin, cytokeratin 8, DAPI, Desmin, DHP (1 -6 Diphenyl-1 ,3, 5-Hexatriene), and others. Other biomarkers may include cell cycle associated markers, e.g. apoptosis protease activating factor-1, bcl-w, bcl-x, bromodeoxyuridine, CAK (cdk-activating kinase), cellular apoptosis susceptibility protein (CAS), caspase 2, and others. Other biomarkers may include neural tissue and tumor markers, e.g. alpha B crystallin, alpha-internexin, alpha synuclein, amyloid precursor protein, beta amyloid, calbindin, choline acetyltransferase, excitatory amino acid transporter 1, GAP43, glial fibrillary acidic protein (GFAP), glutamate receptor 2, myelin basic protein, nerve growth factor receptor (gp75), neuroblastoma marker, and others. Other cellular markers include centromere protein-F (CENP-F), giantin, involucrin, lamin A/C, LAP-70, mucin, nuclear pore complex proteins, p180 lamellar body protein, cathepsin D, Ps2 protein, Her2-neu, P53, S100, epithelial marker antigen (EMA), TdT, MB2, MB3, PCNA, and Ki67.

Even more preferably, the digital virtual histology image represents a virtual staining of a biomarker relevant to cancer diagnostics or immunotherapy, selected from the group consisting of: tumor-expressed markers such as Ki-67, HER2, EGFR, p53, estrogen receptor (ER), and carcinoembryonic antigen (CEA); and immune cell-expressed markers including CD8, CD4, PD-1, PD-L1, CTLA-4, CD20, and CD68. Genomic or non-image-visible biomarkers such as KRAS, BRCA1, and BRCA2 are excluded from virtual staining unless explicitly visualizable through trained paired-data models.

Particular preferably the virtual staining is of an immune cell population, preferably of T cells and most preferably selected from the group consisting of CD8, CD4, PD-1, PD-L1 and CTLA-4 or combinations of the foregoing. Most particular preferably the virtual staining is a staining of CD8-positive T cells. CD8-positive T cells, also known as cytotoxic T cells, have the ability to initiate cell death in cancerous cells and hence their density as well as their location serve as important diagnostic and prognostic markers for tumorous tissue and plays a key role in the choice of treatment as it can predict the effectiveness of certain interventions such as immune checkpoint inhibitor therapies.

In a preferred embodiment the digital virtual histology image is a digital virtual classical stain histology image in which the digital image represents a tissue section simulating the appearance of classical histological stains such as those selected from the group consisting of Hematoxylin and Eosin (H&E), Toluidine Blue, Masson's Trichrome, Van Gieson Stain, Periodic Acid-Schiff (PAS), Oil Red O and Luxol Fast Blue, more preferably H&E or Masson's Trichrome and most preferably H&E. Such classical histological staining effectively delineate overall tissue architecture and cellular details and thus provides detail-rich information in the digital virtual histology image, providing precise structural information for pathological assessment.

In another preferred embodiment, step (B) generates multiple digital virtual histology images in parallel, wherein each image represents a distinct antigen-specific virtual stain. In particular, step (B) generates multiple digital virtual histology images in parallel using separately trained deep learning models for each target biomarker, based on spatially registered image pairs of H&E and the corresponding physical IHC stain. This multiplexed virtual staining method replaces traditional iterative staining cycles that require sequential physical staining, stripping, and restaining. The method eliminates the technical constraints of multiplexed immunostaining, which is typically limited by reagent compatibility, fluorophore spectral overlap, and enzymatic cross-reactivity, thereby enabling simultaneous analysis of multiple biomarkers within the same tissue section.

In a preferred embodiment the computer-implemented method comprises a Vision Transformer (ViT) in step (B). Preferably the ViT is a pre-trained self-supervised ViT. Self-supervised ViTs eliminate the dependency on manually annotated training data, reducing both time and cost for dataset curation. These ViTs leverage contrastive learning and clustering mechanisms to generate robust feature representations from unlabeled data, ensuring adaptability across variable histological staining patterns and scanner types.. Self-supervised refers to a type of unsupervised learning where a model learns to generate useful representations or features from unlabeled data by solving pretext tasks. These tasks involve creating pseudo-labels or supervisory signals from the data itself, enabling the model to train without the need for manually annotated labels.

Preferably the ViT is a ViT-S/16, which divides the input information into 16x16 image patches which reduces the number of generated tokens when compared to a 8x8 image patch division and by this lowers memory requirements. The ViT-S/16 model is efficient and shows comparable performance to other models with more parameters.

In a preferred embodiment the ViT is within a DINO (self-distillation with no labels) self-supervised training framework. DINO's strength lies in the combination of ideas from contrastive learning, clustering, and distillation into a single teacher-student paradigm. DINO's self-distillation mechanism ensures robust and stable training dynamics.

Preferably the training framework comprises a student network and a teacher network. Such a student-teacher paradigm is a versatile approach that enhances learning dynamics, model performance, and robustness.

In a preferred embodiment after self-supervised training, the backbone vision transformer network in the teacher network is retained, and the weights are frozen. This approach utilizes the dense features in the network to enable image segmentation.

Preferably the DINO framework comprises one or more image data augmentation techniques. Particularly preferably the one or more image data augmentation technique is selected from the group consisting of global crops, local crops, random solarization, horizontal flips, grayscale, color-jitter, Gaussian blurs. These image data augmentation techniques improve the model's learning capability and enhance the model's efficacy.

Preferably, the image transformation architecture in step (B) comprises a ViT which is installed sequentially before the GNN. The ViT is preferably connected to the GNN.

In a preferred embodiment the computer-implemented method comprises a deep spectral method (DSM) in step (B). Unlike traditional spectral clustering techniques, which primarily rely on fixed affinity matrices, DSM dynamically integrates semantic affinity information with pixelwise color affinity matrices, enabling adaptive and context-aware segmentation. This hybrid approach allows DSM to capture both global graph structures and fine-grained tissue variations, ensuring efficient and interpretable feature propagation across complex histological image topologies.

The DSM preferably allows for an unsupervised segmentation which by leveraging intrinsic graph frequencies allows for automatic identification of coherent regions or clusters without requiring labeled data, ensuring efficient and accurate structure-based partitioning.

The DSM preferably starts by extracting dense features from the input information via a deep neural network. These extracted dense features are then employed to create a semantic affinity matrix. Preferably the DSM extracts dense features from the input information via a ViGNN.

Preferably the DSM makes use of a color affinity matrix which is combined with the semantic affinity matrix created from the dense features extracted from the input information. The amalgamation of both matrices results in a deconstruction of the input information. Preferably the color affinity matrix comprises spatial information and/or color information for each pixel. More preferably the color information is given as values in the HSV or CIELAB color spaces. CIELAB is ideal for accurate, perceptually uniform color representation and device-independent tasks, while HSV provides an intuitive framework for color manipulation, making both superior to RGB for applications requiring human-centric or device-agnostic color processing.

In a preferred embodiment, the input data is standardized by normalizing pixel intensity variations introduced during imaging. Additionally, noise filtering is performed to enhance signal-to-noise ratios. These adjustments are particularly critical for IHC images, which often exhibit uneven chromogenic distribution, reagent-induced staining artifacts, and scanner-specific variations. By integrating color affinity normalization with deep feature extraction, the method ensures consistent virtual staining performance across different IHC datasets, mitigating batch effects and stain variability.

In a preferred embodiment a combined affinity matrix is computed by the DSM based on the color affinity matrix and the semantic affinity matrix. This combined affinity matrix is then preferably used for unsupervised image segmentation. Unsupervised image segmentation involves dividing an image into meaningful regions or segments without relying on annotated ground truth, using intrinsic properties of the image such as color, texture, or edges. Unsupervised image segmentation eliminates the need for annotated datasets and can be adapted to new datasets without the need of retraining and/or it allows for unbiased discovery of patterns based solely on image features.

Particularly preferably the unsupervised image segmentation uses a spectral clustering algorithm targeting a clustering number of k. In particular, the clusters correspond to morphological or phenotypic structures in the image; semantic interpretation of clusters as specific biomarkers (e.g., CD8+ T cells) requires alignment with virtual stain outputs or reference-labeled datasets. Preferably k is between 2 and 10, more preferably between 2 and 5. This number allows for clustering of the major tissue types and/or distinct cell categories and/or cell species and by this enables a pathological state and/or subtype clustering of the input information.

Preferably the clustering number is k=2. A clustering number of k=2 allows for segmentation of two distinct structures in an image. Preferably these two distinct structures comprise one structure which has a positive signal in an IHC staining for a distinct antigen while the second structure is negative for this specific antigen. Spectral clustering algorithms with clusters of k=2 are computationally less expensive compared to clusters of k>2 and allow for easy pathological subtype clustering.

In a preferred embodiment, for transforming the input information provided in (A) into an output information in (B), a ViT, a GNN, and a DSM are used in an integrated pipeline. The ViT extracts hierarchical contextual features, the GNN encodes spatial and topological relationships, and the DSM refines segmentation through adaptive graph-based clustering. This hybrid approach outperforms traditional deep learning methods by reducing reliance on pixel-level annotations while improving segmentation accuracy in complex histological images.

In a preferred embodiment a Generative Adversarial Network (GAN) is additionally used for transforming the input information in step (B). More preferably, the GAN is integrated with a Graph Neural Network (GNN), wherein the GNN extracts spatial dependencies and structural information from the input image, which is subsequently refined by the GAN to generate high-fidelity virtual stains. The integration of GANs with GNNs ensures both anatomical consistency and realistic stain appearances, differentiating this method from conventional GAN-based virtual staining approaches that lack structural context awareness.

The GAN preferably performs image-to-image translation, more preferably stain-to-stain translation, from the input information, transforming a virtual or physical stain histology image into a (further) virtual stain histology image, preferably a virtual stain IHC image. This has the advantage of enabling very efficient diagnostic workflows in that complex physical (re)stains can be omitted, saving costs, time and health risks posed by physical staining.

In another preferred embodiment the GAN performs transformation of stain-free histology images into virtual stain images, more preferred into virtual stain histology images. This application of GANs enables the generation of high-quality images that mimic the appearance of traditionally stained tissue samples without the need for physical staining processes.

Preferably the GAN comprises at least one self-attention layer and preferably at least one down-sampling layer. More preferably, the generator network of the GAN comprises at least one self-attention layer and at least one down-sampling layer. In the temporal process sequence the self-attention layer preferably follows the down-sampling layer, more preferably the self-attention layer immediately follows the down-sampling layer. Down-sampling layers reduce the high computational complexity and high memory requirements necessitated by extensive data. By using Multi-Head self-attention (MSA) layers important information is filtered out from extensive data allowing to focus on vital information.

More preferably the GAN further comprises at least one residual network block (ResNet block) and/or at least one upsampling block. Even more preferably the generator network of the GAN further comprises at least one residual network block (ResNet block) and/or at least one upsampling block.

Preferably 2-10 ResNet blocks are used for the generator network of the GAN, more preferably 4-9 ResNet blocks are used. This number of ResNet blocks allows for an improved training stability

The GAN is preferably trained by a method using a loss function comprising at least one loss function component selected form the group consisting of adversarial loss (L_{GAN}), contrastive loss (L_{c}) and color-based filter loss (L_{f}), preferably the loss function comprises all of the aforementioned loss function components. Color-based filter loss (L_{f}) is particularly advantageous for input information with weak signal values. The L_{GAN} refers to the average value of the absolute difference between the model-predicted and the ground truth values and ensures that the transformations are performed accurately. Applying all three loss functions provides satisfactory results that can be used to calculate the density of distinct structures in a virtual stain histology image.

Preferably, the adversarial loss function (L_{GAN}) is as follows: ${L}_{GAN} = \frac{1}{MN} {\left‖{x}_{real}-{x}_{virt}\right‖}_{1}$ wherein M and N are the total number of pixels in each image. The LGAN refers to the average value of the absolute difference between the model-predicted (xᵥᵢᵣₜ) and the ground truth (xᵣₑₐₗ) values of a biomarker x.

Preferably, the contrastive loss function (L_{c}) is as follows: ${L}_{c} = \frac{1}{n} {\sum }_{i = 1}^{n} {L}_{SCE} \left(i\right)$ wherein L_{SCE}(i) is the softmax cross-entropy loss, which is as follows: ${L}_{SCE} \left(s, {s}^{+}, {s}^{-}\right) = - log \left[\frac{exp \left({s}^{T}{s}^{+}\right)}{exp \left({s}^{T}{s}^{+}+\right. {\sum }_{n = 1}^{N} exp \left({s}^{T}{s}_{n}^{-}\right)}\right]$ wherein s, s⁺, and s⁻ indicate query, positive, and negative examples. A positive sample and **N** numbers of negative samples are taken from the first digitally stain histology image, while a query sample is taken from the virtual stain histology image. Query, positive and negative examples are mapped as K-dimensional vectors as *s,* ${s}^{+} ∈ {ℝ}^{K}$ and ${s}^{-} ∈ {ℝ}^{K \times N}$. This mapping enables the model to learn feature representations that maximize similarity for positive pairs and minimize similarity for negative pairs, improving the semantic alignment between real and virtual stainings.

Preferably, the color-filter loss function (L_{f}) is calculated as follows: ${L}_{f} = {L}_{1} \left({M}_{r}, {M}_{v}\right)$ where *Mᵥ* is the mask value obtained from the color space transformation of the virtual staining and *Mᵣ* is the template for the actual (real) staining.

Calculation of the values *Mv* and *Mr* is preferably based on the Euclidean distance between the color value of the actual (real) staining of the target biomarker and the color value of the virtual staining. The color value is preferably based on the CIELAB color space, as this model is perceptually uniform and closely matches the human perception of color differences, ensuring even subtle staining variations are accurately detected. By incorporating dynamic thresholds tailored to dataset variability, this loss function adapts to different staining intensities and tissue heterogeneity, ensuring robust virtual stain generation across diverse samples

The threshold defining if a virtual staining is considered matching the real staining is preferably a dynamic threshold. Dynamic, or adaptive, thresholds can be tailored to stain variability and tissue heterogeneity. Preferably the threshold is statistically determined during training or adjusted based on specific datasets. This allows for optimal virtual staining in particular with regard to accuracy and clarity of the virtual stain.

Preferably, the total loss function (L_{T}) of the GAN model is as follows: ${L}_{T} = {L}_{GAN} + {L}_{f} + {L}_{c}$

This combination of loss functions creates a balance between global realism, local feature accuracy, and fine-grained color fidelity, particularly when handling high-dimensional histology data. Dynamic thresholds can be calculated using dataset-specific statistics such as mean and variance of color intensity differences between virtual and real staining. Alternatively, percentile-based thresholds could provide dataset-agnostic adaptability.

Preferably the GAN is trained with spatially registered image datasets, more preferably these image datasets comprise perfectly matched pairs, most preferably the datasets consist of perfectly matched pairs.

For selecting perfectly matched pairs, a normalization cross-correlation (NCC) method is preferably applied. In a preferred embodiment a threshold value of 0.2, more preferably of 0.3 and most preferably of 0.4 is chosen to decide whether pairs are perfectly matching or not. Preferably, pairs with NCC results of ≥ 0.2, more preferably of ≥ 0.3 and most preferably of ≥ 0.4 were included in the dataset, pairs with values below the threshold were excluded. NCC thresholds (e.g., 0.2, 0.3, 0.4) are empirically determined to balance inclusion of high-quality pairs and exclusion of noisy, mismatched pairs. This ensures the GAN model's robustness during training and avoids propagating errors from poorly aligned training data.

Preferably, the GAN is trained with a dataset of spatially registered pairs of physical stain histology images, such as H&E and corresponding IHC images, which enable the generator to learn biomarker-specific virtual staining via color and structural feature alignment.

In a preferred embodiment, diffusion models, preferably Denoising Diffusion Probabilistic Models (DDPMs), Stable Diffusion, DALL-E 2, Imagen and Latent Diffusion Models (LDMs), can be used in step B). More preferred such diffusion models are integrated into the GAN(s). Diffusion models are well-suited for medical imaging in which detail preservation is critical. These models refine image quality which can assist generative networks to produce highly detailed virtual staining.

In a preferred embodiment the step of transforming the input information (step (B)) comprises, preferably consists of, a modular architecture. Single modules can be integrated, augmented and/or swapped within this modular architecture allowing for a high degree of flexibility and quick adaptation to new staining protocols and/or image needs.
he modular architecture comprises interchangeable components that enhance flexibility and adaptability to different staining protocols and image requirements. These components include: Feature Extraction Modules: Vision Transformers (ViTs), preferably ViT-S/16; Vision Transformer-based Graph Neural Networks (ViGNNs).Graph Neural Networks (GNNs): Graph Attention Networks (GATs), Graph Sample and Aggregate (GraphSAGE), Path Integral Networks (PINs), Relational Graph Convolution Networks (R-GCNs), Message Passing Neural Networks (MPNNs), Heterogeneous Graph Attention Networks (HANs), and Graph Transformer Networks (GTNs).Graph Spectral Methods (DSMs): Spectral Graph Convolutional Networks (Spectral GCN), ChebNet, Graph Wavelet Neural Networks, EigenGCN, Spectral Graph Attention Network (SpecGAT), Deep Spectral Graph Clustering, and Laplacian Eigenmaps with Deep Extensions. Generative Models: Generative Adversarial Networks (GANs) and Diffusion Modules, such as Denoising Diffusion Probabilistic Models (DDPMs),

In a preferred embodiment the computer-implemented method further comprises a step of computing one or more pathological predictions for the tissue sample from which the first digital histology image originates.

Pathological assessment of tissue samples, such as biopsies, plays a critical role in diagnosing diseases and determining appropriate treatment strategies. Traditionally, this process relies on manual examination by pathologists, which can be time-consuming and prone to inter-observer variability. Advances in computational pathology and machine learning have enabled automated systems to assist in diagnosing diseases by analyzing digitized images of tissue samples. Computing one or more pathological predictions thus allows for time- and resource-saving processes in disease diagnosis which is especially critical for treatment-sensitive diseases.

The one or more pathological predictions are preferably selected from the group selected from binary classification (e.g. benign vs. malignant), disease identification (e.g. cancer type), subtype classification (e.g. HER2-positive breast cancer), tumor grading (e.g. low, intermediate, or high grade tumor), cancer stage (e.g. TNM staging system), response to treatment prediction (e.g. prediction of immunotherapy response), recurrence risk (e.g. likelihood of disease recurrence) and survival analysis (e.g. predicted disease-free survival). Additionally, predictions may include the identification of immune cell density (e.g., CD8-positive T cells), tumor microenvironment analysis (e.g., stromal vs. epithelial content), or spatial relationships between biomarkers, enabling deeper insights into tissue morphology and functional status.

The pathological prediction is preferably visualized in formats selected from the group consisting of contour maps, image annotations, graphs, charts, heatmaps, tables, reports, scores or combinations of the foregoing. Such predictions may include classification results, cell density measurements, immune cell distribution, or biomarker expression levels derived from virtual staining and segmentation outputs. For higher-order predictions such as treatment response or survival analysis, additional data modalities beyond histology may be required.

In preferred embodiments, the visualization integrates multi-modal overlays, such as combining virtual stain predictions with spatial segmentation maps, to enhance interpretability and clinical utility.

In a preferred embodiment the inventive computer-implemented method is compatible with laboratory information systems, digital pathology platforms and/or cloud-based diagnostic systems and/or can be integrated into said systems and/or platforms.

"Laboratory information systems (LIS)" are software solutions designed to manage, store and analyze laboratory data and workflow. It facilitates tracking of laboratory samples, text results and associated data, improving efficiency, accuracy, and compliance in laboratory operations.

"Digital pathology platforms" are software-based systems that allow pathologists to view and interpret high-resolution digital histology images of tissue samples, replacing traditional microscopic methods. These systems typically integrate tools for image analysis and workflow management, enabling efficient collaboration among pathologists and technicians and allowing for quick and reliable diagnostics.

"Cloud-based diagnostic systems" are healthcare platforms hosted on cloud infrastructure which enable the storage, analysis, and sharing of diagnostic data in a preferably secure environment. Such systems provide low or unlimited accessibility to diagnostic tools, data and results enabling real-time collaboration from anywhere.

Preferably the computer-implemented method is integrated into all aforementioned systems and platforms.

Integration of the method into said system(s) and/or platform(s) advances automation of pathological workflows by omitting wet lab work steps, improving scalability for high-throughput clinical settings. Moreover, such integration ensures consistent diagnostic outcomes by minimizing human variability and leveraging standardized computational frameworks.

### EXAMPLE

An IHC-stained tissue section image was used as the first digital histology image in step (A). For this, antibodies against CD8 and counterstaining with hematoxylin were employed to generate the ground truth labels used during training of the virtual staining and segmentation modules. This example illustrates the supervised training case using paired H&E and CD8-labeled images. This first digital histology image was used as input information which was subsequently transformed in step (B). Here, deep spectral methods (DSM) were employed to scrutinize the deep features of a vision transformer-based graph neural network (ViGNN) and color features were ingeniously combined with them to achieve a segmentation of the image without the need for ground truth. The method involves the experimental construction of a combined affinity matrix, realized through a judicious weighted combination of a color affinity matrix with two deep feature affinity matrices. This process enables the subsequent utilization of the combined affinity matrix for unsupervised image segmentation, with the spectral clustering algorithm targeting a clustering number of k = 2. The results of this inventive method effectively differentiate and semantically segment two distinct types of cells in the image. This capability is particularly relevant for identifying immune infiltrates, such as CD8-positive T cells, which are critical for immunotherapy assessment and prognosis in cancer patients. Furthermore, a deeper examination through the visualization of the first two eigenvectors of the color affinity matrix, alongside the two deep feature affinity matrices, provides intriguing insights. The eigenvectors of these affinity matrices accomplish soft segments of the images, a characteristic representation indicative of the method's advantages. The experimental results of the comparison of the different methods are shown in Table 1. The images of the selected original sections as well as the segmentation results of two baseline methods (CIELAB and HSV) and the inventive method are demonstrated, along with their corresponding CD8-positive T cell density estimates. In contrast to unsupervised segmentation methods only based on color space (CIELAB and HSV), the inventive method does not rely excessively on color information and has superior coverage capabilities. The superior performance of the inventive method in estimating CD8-positive T cell density underscores its ability to accurately model spatial and semantic relationships within the tissue, setting a new benchmark for computational pathology applications.

**Table 1**

| **Method** | **CD8-positive T cell density estimate** |
|---|---|
| CIELAB | 0.0103 |
| HSV | 0.0297 |
| Inventive method | 0.0561 |

## Claims

1. **Computer-implemented method** for transforming a first digital histology image,
wherein the method comprises the following steps:
(A) providing as input information a first digital histology image originating from a tissue sample,
(B) transforming the input information provided in (A) into at least one output information different from the input information, wherein the at least one output information is visualizable as a second digital histology image of the tissue sample and/or a segmentation representation of the tissue sample,
**characterized in that**
a Graph Neural Network (GNN) is used in step (B) for transforming the input information into the output information.

2. **Computer-implemented method** according to claim 1, wherein the first digital histology image is selected from the group consisting of digital stain-free histology images, digital physical stain histology images and digital virtual stain histology images.

3. **Computer-implemented method** according to any of the preceding claims, wherein the first digital histology image is a whole slide image (WSI), preferably a WSI of a Hematoxylin and Eosin (H&E) stained tissue sample.

4. **Computer-implemented method** according to any of the preceding claims, wherein the method further comprises the following step: partitioning of the first digital histology image into two or more image patches,
wherein preferably the first digital histology image is a whole slide image (WSI), for example with high-resolution dimensions ranging from 50,000 x 50,000 pixels to 100,000 x 150,000 pixels, wherein more preferably the first digital histology image is a WSI of a Hematoxylin and Eosin (H&E) stained tissue sample.

5. **Computer-implemented method** according to claim 4, wherein one of the two dimensions of each of the two or more image patches has a size of 150 - 300 pixels.

6. **Computer-implemented method** according to any of the preceding claims, wherein the second digital histology image is a digital virtual stain histology image.

7. **Computer-implemented method** according to claim 6, wherein the digital virtual stain histology image is a digital virtual immunohistochemistry image or a digital virtual immunofluorescence image.

8. **Computer-implemented method** according to claims 6 or 7, wherein the digital virtual stain histology image represents a virtual staining of an immune cell population, preferably of T cells.

9. **Computer-implemented method** according to claims 1-5, wherein the segmentation representation is of an immune cell population, preferably of T cells, particularly for diagnosing and monitoring cancer or autoimmune diseases.

10. **Computer-implemented method** according to any of the preceding claims, wherein a Vision Transformer (ViT) is additionally used for transforming the input information in step (B), wherein the ViT is preferably pre-trained by self-supervised learning.

11. **Computer-implemented method** according to any of the preceding claims, wherein a deep spectral method (DSM) is additionally used for transforming the input information in step (B), wherein the DSM preferably allows for an unsupervised segmentation.

12. **Computer-implemented method** according to any of the preceding claims, wherein a Generative Adversarial Network (GAN) is additionally used for transforming the input information in step (B).

13. **Computer-implemented method** according to claim 12, wherein the GAN comprises at least one self-attention layer and preferably at least one down-sampling layer and the self-attention layer follows the down-sampling layer in the temporal process sequence.

14. **Computer-implemented method** according to any of the claims 12 or 13, wherein the GAN was trained by a method using a loss function comprising at least one loss function component selected from the group consisting of adversarial loss, contrastive loss and color filter loss, preferably the loss function comprises all of the aforementioned loss function components.

15. **Computer-implemented method** according to any of the preceding claims, wherein the method further comprises the following step:
(C) computing one or more pathological predictions for the tissue sample from which the first digital histology image originates.
